# EUROPÄISCHE PATENTANMELDUNG

(11) **EP 1 110 814 A2**
(43) Veröffentlichungstag der Anmeldung: **27.06.2001**
(21) Anmeldenummer: 00126941.4
(22) Anmeldetag: 08.12.2000
(51) Int. Cl.: B60Q 1/00

(54) **Fahrzeugscheinwerfer**

(30) Priorität: 22.12.1999 DE 19961859
(71) Anmelder: Hella KG Hueck & Co., 59552 Lippstadt (DE)
(72) Erfinder: Böckeler, Franz-Josef, 59594 Soest (DE); Jiménez, José Manuel Priego, 33104 Paderborn (DE)

(57) **Zusammenfassung**

Fahrzeugscheinwerfer mit mindestens einem in einem Gehäuse (2) angeordneten Reflektor (3) und einer dem Reflektor (4) benachbarten Leuchte (5), einer das Gehäuse (2) nach vorn abdeckenden transparenten Abdeckscheibe (7) und einem zwischen Reflektor und Abdeckscheibe angeordneten Abdeckrahmen (6), wobei der Abdeckrahmen (6) in einem der Leuchte benachbarten Bereich von einem Leuchtengehäuse (8) der Leuchte (5) an einer der Abdeckscheibe (7) abgewandten rückwärtigen Gehäusewandung (10) des Gehäuses (2) gehaltert wird.

## Beschreibung

Die Erfindung betrifft einen Fahrzeugscheinwerfer mit mindestens einem in einem Gehäuse angeordneten Reflektor und einer dem Reflektor benachbarten Leuchte, einer das Gehäuse nach vorn abdeckenden transparenten Abdeckscheibe und einem zwischen Reflektor und Abdeckscheibe angeordneten Abdeckrahmen.

Aus der EP 0 679 551 A2 ist ein Fahrzeugscheinwerfer bekannt, der in einem Gehäuse einen ersten und einen zweiten Reflektor je eines Scheinwerfers aufweist, sowie eine dem ersten Reflektor benachbarte Leuchte. Den Reflektoren bzw. der Leuchte ist zu einer das Gehäuse abschließenden Abdeckscheibe hin ein Abdeckrahmen vorgelagert.

Nachteilig dabei ist, dass der durch seine Hockglanzbedampfung relativ empfindliche Rahmen zwischen Gehäuse und Abdeckscheibe eingesetzt wird. Dabei muss der Abdeckrahmen einerseits gegen das Gehäuse und anderseits gegen die Abdeckscheibe abgedichtet werden. Eine Fixierung erfolgt über Spannelemente, die die Abdeckscheibe in Richtung Gehäuse spannen. Das macht die Montage relativ kompliziert bzw. aufwendig und somit auch teuer.

Weiterhin sind Abdeckrahmen bekannt, die mit dem Gehäuse verschraubt werden.

Aufgabe der vorliegenden Erfindung ist es daher, die bekannten Fahrzeugscheinwerfer so zu verbessern, dass bei einfacher, kostengünstiger Montage der Abdeckrahmen sicher positioniert und fixiert bzw. gehaltert werden kann.

Diese Aufgabe wird erfindungsgemäß dadurch gelöst, dass der Abdeckrahmen in einem der Leuchte benachbarten Bereich von einem Leuchtengehäuse der Leuchte an einer der Abdeckscheibe abgewandten rückwärtigen Gehäusewandung des Gehäuses gehaltert wird.

Dadurch, dass der Abdeckrahmen von der Leuchte bzw. deren Leuchtengehäuse an der rückwärtigen Gehäusewandung gehaltert wird, ist es möglich, den Abdeckrahmen einfach und sicher zu positionieren und zu haltern. Dadurch, dass der Abdeckrahmen nicht zwischen Gehäuse und Abdeckscheibe festgeklemmt wird, kann auf eine Abdichtung zwischen Abdeckrahmen und Gehäuse gänzlich verzichtet werden. Lediglich die Abdeckscheibe muss noch gegenüber dem Gehäuse abgedichtet werden. Der Abdeckrahmen kann somit einfach und kostengünstig montiert und gehaltert werden. Auch sind keine zusätzlichen Verschraubungen notwendig.

Gemäß einer weiteren bevorzugten Ausführungsform der Erfindung weist der Abdeckrahmen einen auf das Leuchtengehäuse abgestimmten Aufnahmeabsatz mit einem der rückwärtigen Gehäusewandung benachbarten Bodenteil auf, auf dem das in die Aufnahme eingesetzte Leuchtengehäuse mit Teilbereichen seines rückwärtigen Endes aufsitzt. Das Leuchtengehäuse ist mit der rückwärtigen Gehäusewandung verschraubbar.

Nach Montage des mindestens einen Reflektors kann der Abdeckrahmen so einfach in Position gebracht und durch das in den Aufnahmeabsatz eingesteckte und auf dem Bodenteil aufsitzende und mit der Gehäusewandung verschraubte Gehäuseteil an der Gehäusewandung festgeklemmt werden. Das Leuchtengehäuse kann dabei an seinem rückwärtigen Ende Auflagerippen aufweisen, die an der rückwärtigen Gehäusewandung anliegen. Die Leuchte übernimmt durch die Formgebung ihres Leuchtengehäuses somit die Positionierung des gehäuseseitigen Abdeckrahmens, wobei dieser durch die Verschraubung des Leuchtengehäuses an der Gehäusewandung eingeklemmt und damit automatisch mitfixiert wird. Eine grobe Vorfixierung von Abdeckrahmen und Leuchtengehäuse zueinander erfolgt durch die Formgebung der beiden Teile, wobei eine genauere Zentrierung über die Schraubposition des Leuchtengehäuses erzielt bzw. ermöglicht wird.

Gemäß einer weiteren bevorzugten Ausführungsform der Erfindung ist das Leuchtengehäuse im Wesentlichen tubusförmig ausgebildet und weist einen angeformten Reflektor auf. Das Leuchtengehäuse ist dabei zur Abdeckscheibe hin von einer Lichtscheibe abgedeckt. Das Leuchtengehäuse ist damit so gestaltbar, dass auf eine Abdeckung durch einen gesonderten Abdeckrahmen im Bereich der Leuchte verzichtet werden kann. Durch die Anformung des Reflektors am Leuchtengehäuse wird zugleich die Montage erleichtert.

Nach einer weiteren bevorzugten Ausführungsform der Erfindung weist das Leuchtengehäuse eine angeformte Bajonettaufnahme auf, in die über entsprechende Öffnungen in der rückwärtigen Gehäusewandung und des Abdeckrahmens eine Lampenfassung mit einem Bajonett einsetzbar ist. Die Bajonettaufnahme ist dabei am Reflektor angeordnet.

Durch die Anformung der Bajonettaufnahme direkt am Leuchtengehäuse bzw. am Reflektor lässt sich eine sehr genaue Positionierung der Glühwendellage einer in der Lampenfassung angeordneten Lampe zum Reflektor erzielen.

Gemäß einer weiteren bevorzugten Ausführungsform der Erfindung ist die Lampenfassung gegenüber der Gehäusewandung durch einen Dichtring abdichtbar. Das Bajonett der Lampenfassung lehnt sich dabei am Gehäuse an und verriegelt in der Bajonettaufnahme unter einer Vorspannung.

Dadurch, dass die Lampenfassung gegenüber der Gehäusewandung abdichtbar und sich an der Gehäusewandung anlehnt, ist das Bajonett quasi aufgesplittet. Die Abdichtung der Lampenfassung erfolgt vorteilhaft bereits am Gehäuse des Scheinwerfers, während die eigentliche Bajonettierung am Leuchtengehäuse realisiert wird. Bei exakter Positionierung der Glühwendellage im Leuchtengehäuse wird ohne zusätzliche Dichtteile eine Abdichtung am Gehäuse des Scheinwerfers erzielt.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

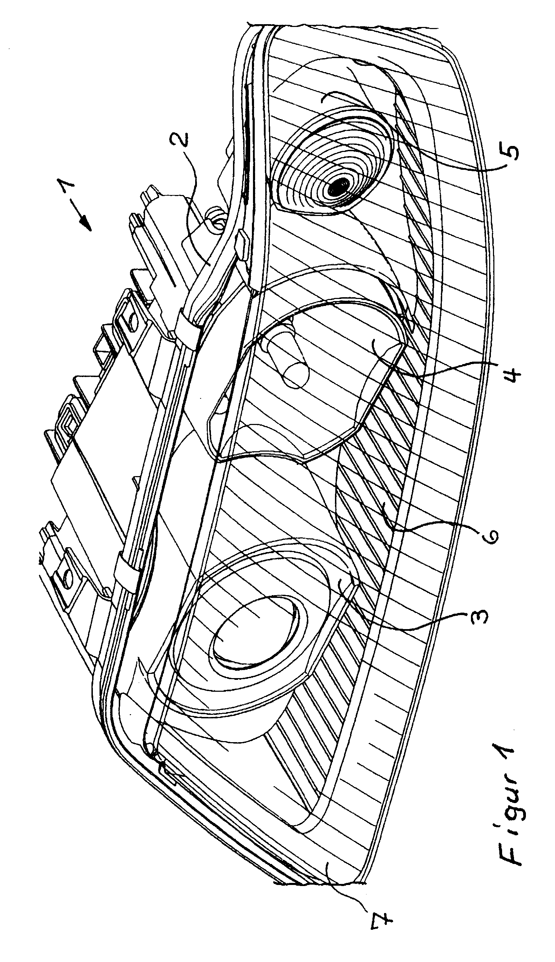

- Figur 1:: Eine räumliche, verkleinerte Darstellung eines Fahrzeugscheinwerfers von vorn gesehen,

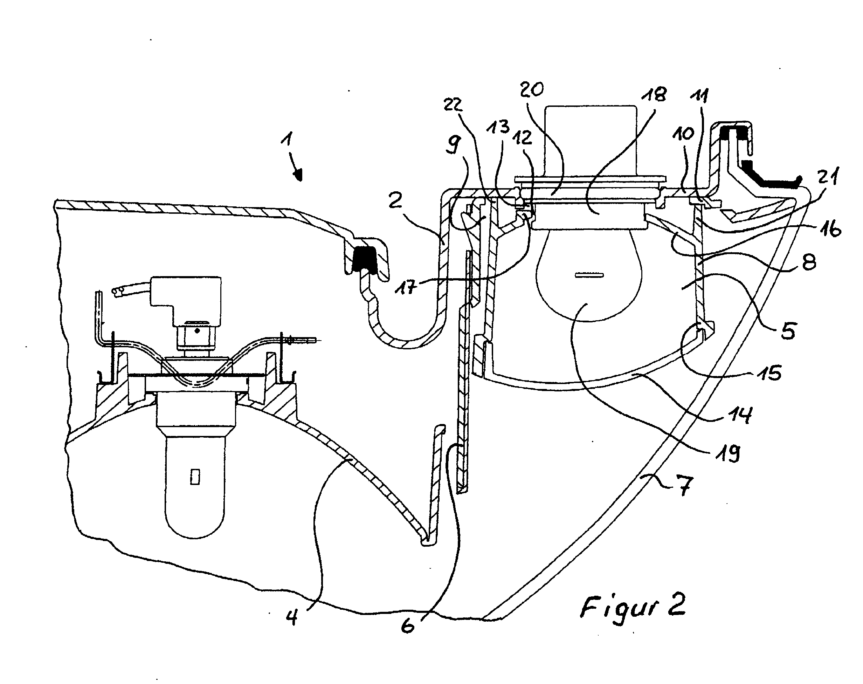

- Figur 2:: eine Draufsicht auf den Fahrzeugscheinwerfer von Figur 1 in einem Horizontalschnitt und Ausriss,

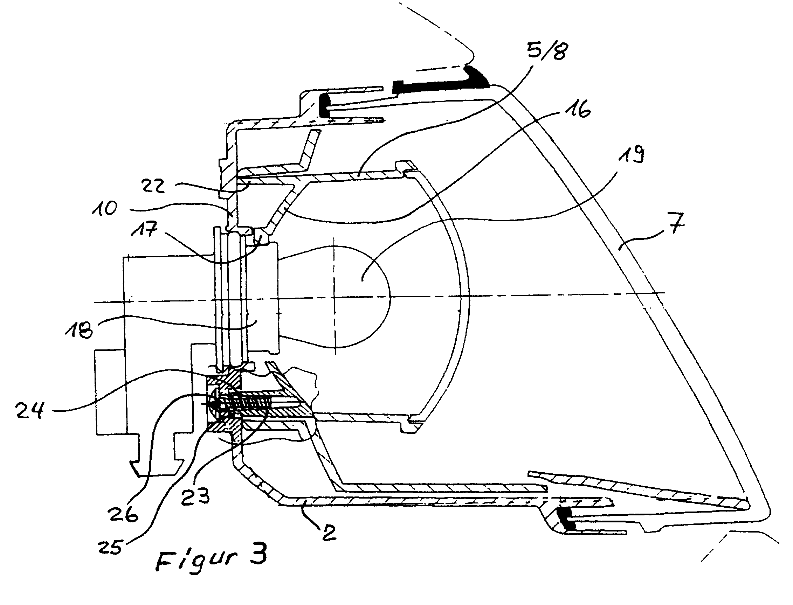

- Figur 3:: eine Seitenansicht des Fahrzeugscheinwerfers von Figur 1 im Vertikalschnitt durch das Leuchtengehäuse im Ausriss,

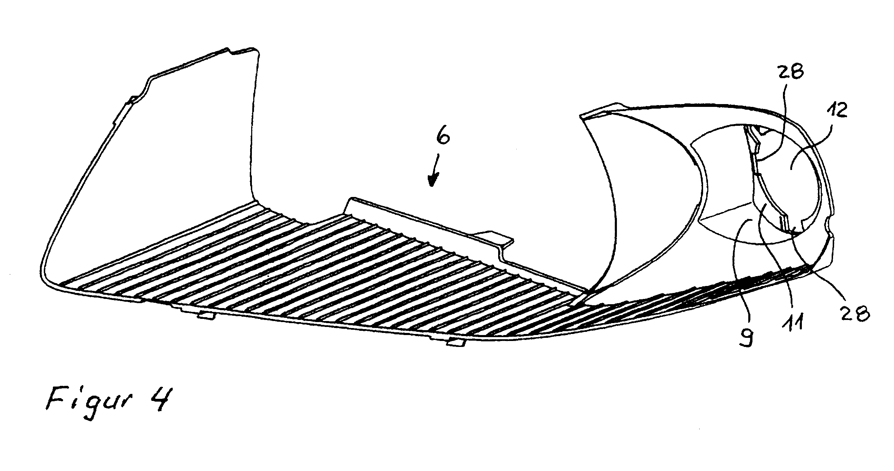

- Figur 4:: eine räumliche, verkleinerte Darstellung des Abdeckrahmens von Fig.1,

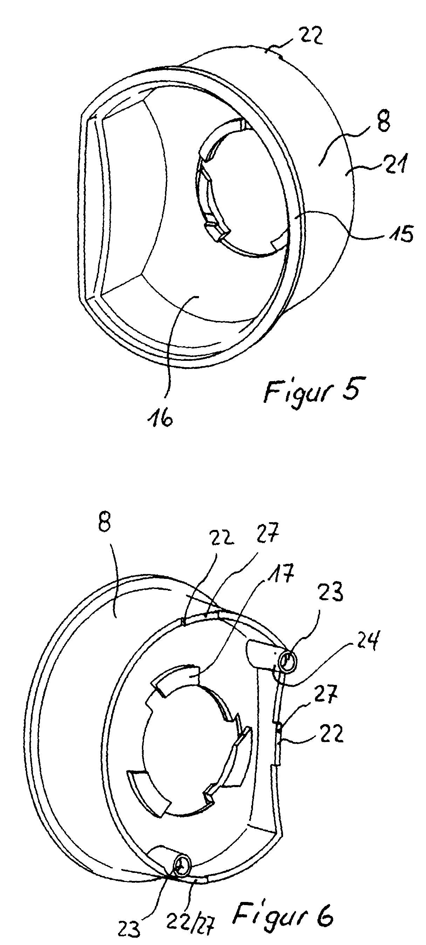

- Figur 5:: eine räumliche Darstellung einer Vorderansicht des Leuchtengehäuses von Figur 1 und
- Figur 6:: eine räumliche Darstellung des Leuchtengehäuses von Figur 5 in einer Rückansicht.

Ein Fahrzeugscheinwerfer 1 besteht im Wesentlichen aus einem Gehäuse 2, Reflektoren 3, 4, einer Leuchte 5, einem Abdeckrahmen 6 und einer Abdeckscheibe 7.

In dem Gehäuse 2 ist der innere Reflektor 3 und der äußere Reflektor 4, der der als Blinkleuchte ausgebildeten Leuchte 5 benachbart ist, angeordent. Das Gehäuse 2 wird nach vorn von der den Reflektoren 3, 4 vorgelagerten optiklosen Abdeckscheibe 7 abgeschlossen. Zwischen den Reflektoren 3, 4 und der Abdeckscheibe 7 ist der Abdeckrahmen 6 angeordnet.

Der Abdeckrahmen 6 weist dem zweiten Reflektor 4 benachbart einen auf ein Leuchtengehäuse 8 der Leuchte 5 abgestimmten Aufnahmeabsatz 9 auf. Der Aufnahmeabsatz 9 weist ein einer rückwandigen Gehäusewandung 10 des Gehäuses 2 benachbartes Bodenteil 11 auf. In dem Bodenteil 11 ist eine Aufnahmeöffnung 12 angeordnet. Der Aufnahmeöffnung 12 benachbart ist eine äußere Aufnahmeöffnung 13 in der rückwärtigen Gehäusewandung 10 angeordnet. Das Leuchtengehäuse 8 ist im Wesentlichen tubusförmig ausgebildet und mit einer Lichtscheibe 14 an seinem der Abdeckscheibe 7 zugewandten vorderen Ende 15 abgedeckt. Das Leuchtengehäuse 8 weist einen angeformten Reflektor 16 auf. An seinem der Gehäusewandung 10 zugewandten Ende weist der Reflektor 16 eine angeformte Bajonettaufnahme 17 auf, in die über die Aufnahmeöffnungen 12, 13 eine Lampenfassung 18 mit einem Bajonett einsetzbar ist. Eine Lampe 19 ist ihrerseits in die Lampenfassung 18 einsetzbar. Die Lampenfassung 18 ist gegenüber der rückwärtigen Gehäusewandung 10 bzw. deren Aufnahmeöffnung 13 durch einen Dichtring 20 abgedichtet.

Das Leuchtengehäuse 8 weist an seinem dem vorderen Ende 15 abgewandten rückwärtigen Ende 21 Aufschlagrippen 22 auf, die an der rückwärtigen Gehäusewandung 10 anliegen. Zu dem benachbarten Reflektor 4 hin ist das Leuchtengehäuse 8 abgeflacht bzw. konkav gewölbt. An seinem rückwärtigen Ende 21 weist das Leuchtengehäuse 8 zwei Schraubansätze 23 auf, die mit ihren freien Enden 24 in entsprechende Aufnahmeöffnungen 25 der rückwärtigen Gehäusewandung 10 hineinragen und über Schrauben 26 mit der rückwärtigen Gehäusewandung 10 verschraubbar sind.

Zur Montage des Fahrzeugscheinwerfers 1 wird nach Montage der Reflektoren 3, 4 der Abdeckrahmen 6 in das Gehäuse 2 eingesetzt. Anschließend wird das Leuchtengehäuse 8 mit seiner beispielsweise verschweißten Lichtscheibe 14 in den Aufnahmeabsatz 9 des Abdeckrahmens 6 so eingesetzt, dass das Leuchtengehäuse 8 mit seinem rückwärtigen Ende auf dem Bodenteil 11 des Aufnahmeabsatzes 9 aufsitzt, wobei die Aufschlagrippen 22 mit ihren Stirnseiten 27 durch entsprechende Aussparungen 28 im Bodenteil 11 hindurchgreifen und an der rückwärtigen Gehäusewandung 10 anliegen. Die Schraubansätze 23 werden dabei mit ihren freien Enden 24 in die Aufnahmeöffnungen 25 eingesetzt. anschließend wird das Leuchtengehäuse 8 von der Rückseite der rückwärtigen Gehäusewandung 10 her durch einschrauben der Schrauben 26 in die Schraubeinsätze 23 an der Gehäusewandung 10 festgeschraubt, so dass dadurch auch der Abdeckrahmen 6 gehaltert wird. Nun kann gegebenenfalls noch eine Blende auf den Abdeckrahmen 6 aufgesetzt und das Gehäuse 2 mit der Abdeckscheibe 7 abaedeckt werden.

## Patentansprüche

1. Fahrzeugscheinwerfer mit mindestens einem in einem Gehäuse angeordneten Reflektor und einer dem Reflektor benachbarten Leuchte, einer das Gehäuse nach vorn abdeckenden transparenten Abdeckscheibe und einem zwischen Reflektor und Abdeckscheibe angeordneten Abdeckrahmen, dadurch gekennzeichnet, dass der Abdeckrahmen (6) in einem der Leuchte (5) benachbarten Bereich von einem Leuchtengehäuse (8) der Leuchte (5) an einer der Abdeckscheibe (7) abgewandten rückwärtigen Gehäusewandung (10) des Gehäuses (2) gehaltert wird.

2. Fahrzeugscheinwerfer nach Anspruch 1, dadurch gekennzeichnet, dass der Abdeckrahmen (6) einen auf das Leuchtengehäuse (8) abgestimmten Aufnahmeabsatz (9) mit einem der rückwärtigen Gehäusewandung (10) benachbarten Bodenteil (11) aufweist, auf dem das in den Aufnahmeabsatz (9) eingesetzte Leuchtengehäuse (8) mit Teilbereichen seines rückwärtigen Endes (21) aufsitzt.

3. Fahrzeugscheinwerfer nach Anspruch 1 oder 2, dadurch gekennzeichnet, dass das Leuchtengehäuse (8) an seinem rückwärtigen Ende (21) Auflagerippen (22) aufweist, die an der rückwärtigen Gehäusewandung (10) anliegen.

4. Fahrzeugscheinwerfer nach einem der Ansprüche 1 bis 3, dadurch gekennzeichnet, dass das Leuchtengehäuse (8) mit der rückwärtigen Gehäusewandung (10) verschraubbar ist.

5. Fahrzeugscheinwerfer nach einem der Anspruche 1 bis 4, dadurch gekennzeichnet, dass das Leuchtengehäuse (8) im Wesentlichen tubusförmig ausgebildet ist und mit einer Lichtscheibe (14) abdeckbar ist.

6. Fahrzeugscheinwerfer nach einem der Ansprüche 1 bis 5, dadurch gekennzeichnet, dass das Leuchtengehäuse (8) einen angeformten Reflektor (16) aufweist.

7. Fahrzeugscheinwerfer nach einem der Ansprüche 1 bis 6, dadurch gekennzeichnet, dass das Leuchtengehäuse (8) eine angeformte Bajonettaufnahme (17) aufweist, in die über entsprechende Aufnahmeöffnungen (12, 13) in der rückwärtigen Gehäusewandung (10) und des Abdeckrahmens (6) eine Lampenfassung (18) mit einem Bajonett einsetzbar ist.

8. Fahrzeugscheinwerfer nach Anspruch 7, dadurch gekennzeichnet, dass die Bajonettaufnahme (17) am Reflektor (16) angeordnet ist.

9. Fahrzeugscheinwerfer nach Anspruch 7 oder 8, dadurch gekennzeichnet, dass die Lampenfassung (18) gegenüber der Gehäusewandung (10) durch einen Dichtring (20) abdichtbar ist.

10. Fahrzeugscheinwerfer nach einem der Ansprüche 7 bis 9, dadurch gekennzeichnet, dass das Bajonett der Lampenfassung (18) sich am Gehäuse (2) anlehnt und in der Bajonettaufnahme (17) unter einer Vorspannung verriegelt.
